# EUROPÄISCHE PATENTSCHRIFT

(11) **EP 4 315 560 B1**
(45) Veröffentlichungstag und Bekanntmachung des Hinweises auf die Patenterteilung: **30.09.2026**
(21) Anmeldenummer: 22730727.9
(22) Anmeldetag: 19.05.2022
(51) Int. Cl.: H02K 1/14, H02K 15/095, H02K 15/33, H02K 3/52

(54) **VERFAHREN ZUR AUSBILDUNG EINER STATORWICKLUNG, VOLLBLECHSTATOR UND ELEKTROMOTOR**
METHOD FOR FORMING A STATOR WINDING, ANNULAR LAMINATED CORE AND ELECTRIC MOTOR
PROCÉDÉ POUR FORMER UN ENROULEMENT DE STATOR, STATOR EN TÔLE PLEINE ET MOTEUR ÉLECTRIQUE

(30) Priorität: 21.05.2021 DE 102021205244
(43) Veröffentlichungstag der Anmeldung: 07.02.2024
(73) Patentinhaber: Brose Fahrzeugteile SE & Co. Kommanditgesellschaft, Würzburg, 97076 Würzburg (DE)
(72) Erfinder: STRAUSS, Wolfgang, 97294 Unterpleichfeld (DE); VOLKAMER, Alexander, 91483 Oberscheinfeld (DE)
(74) Vertreter: FDST Patentanwälte
(86) Internationale Anmeldenummer: PCT/EP2022/063556
(87) Internationale Veröffentlichungsnummer: WO 2022/243426

(56) Entgegenhaltungen:
- JP-A- 2011 200 091
- US-A1- 2013 313 927
- US-A1- 2019 319 506
- US-A1- 2020 381 973

## Beschreibung

Die Erfindung betrifft ein Verfahren zur Ausbildung einer Statorwicklung eines Vollblechstators für einen Elektromotor. Des Weiteren betrifft die Erfindung einen solchen Vollblechstator sowie einen Elektromotor.

Bei einem Vollblechstator (auch: "Vollblechschnittstator") handelt es sich üblicherweise um einen Stator, der aus einem Blechpaket gebildet ist, dessen Einzelbleche ringförmig geschlossen sind. Sogenannte (Stator-) Zähne, die durch jeweils eine Nut im Blechpaket voneinander beabstandet sind und im bestimmungsgemäßen Einsatzzustand eine aus einem Spulendraht gewickelte Spule zur Erzeugung eines Magnetfelds tragen, ragen bei einem innengenuteten Vollblechstator radial nach innen. Im Gegensatz dazu sind auch Statoren bekannt, die aus sogenannten Zahnketten gebildet werden. Das Blechpaket wird dabei zwischen den einzelnen Zähnen aufgeklappt, im offenen Zustand bewickelt und anschließend zum Statorring zusammengefügt.

Die an den einzelnen Zähnen gebildeten Spulen sind - je nach Ausführung des Elektromotors - bspw. alternierend mit zwei oder auch drei Phasen eines elektrischen Netzes verschaltet. Die Verschaltung erfolgt üblicherweise - meist mittelbar über eine Motorelektronik - über eine Stirnfläche des Stators, an der entsprechend auch die Motorelektronik angeordnet ist. Um einen elektrischen Schluss zwischen dem Spulendraht und dem Blechpaket zu verhindern, sind unterschiedliche Isolationsarten bekannt. Meist ist aber unabhängig von der Isolation entlang der Nuten im Bleckpaket - zumindest bei einem Vollblechstator - eine sogenannte Isolierendscheibe an den Stirnseiten angeordnet. Diese kann aufgesteckt, anspritzt oder auch gemeinsam mit einer Isolation der Nuten und Zähne als Körper um das Statorblechpaket herumgespritzt sein. Die anschlussseitige Isolierendscheibe, d. h. die auf der Seite, an der die Kontaktierung der Spulen erfolgt und die Motorelektronik angeordnet ist, weist dabei sogenannte Terminierdome auf, d. h. axial vorstehende Vorsprünge, an denen der Spulendraht zur sogenannten Terminierung festgelegt werden kann. Unter Terminierung wird dabei das Verlegen des Spulendrahts zur Kontaktstelle und/oder zwischen wenigstens zwei der gleichen Phase zugeordneten Spulen verstanden. Üblicherweise sind an der Isolierendscheibe auch Kontaktiervorrichtungen, bspw. Aufnahmen für sogenannte Schneidklemmkontakte, angeordnet, in denen der Spulendraht zur Kontaktierung mit der Motorelektronik befestigt ist. Je kleiner der Elektromotor und damit auch der Stator ausgeführt sind, desto weniger Bauraum bleibt jedoch an der Isolierendscheibe für die Terminierdome und/oder der Kontaktiervorrichtungen, so dass diese kleiner und damit mechanisch weniger belastbar ausgeführt werden müssen.

US 2020/0381973 A1 beschreibt einen Stator eines bürstenlosen Motors. Dieser umfasst einen Statorkern und eine Statorwicklung. Der Statorkern hat einen Statorrahmen, einen Spulenträger und mehrere Polschuhe. Der Spulenträger ist an einem der beiden Ränder des Statorrahmens angebracht und hat eine Zahnbasis und mehrere Zähne. Die Zähne sind auf der Oberseite des Zahnsockels ausgebildet. Die Polschuhe sind an der inneren Ringfläche des Statorgehäuses ausgebildet. Die Statorwicklung wird aus einem einzigen Draht gebildet, der um die Zahnbasis, die mehreren Zähnen und die mehreren Polschuhen gewickelt und durch drei der mehreren Schlitze des Spulenträgers geführt wird, um sich über die äußere ringförmige Oberfläche des Statorrahmens hinaus zu erstrecken und drei verlängerte Segmente zu bilden, die den U-Phasen-, V-Phasen- und W-Phasen-Ausgangsklemmen eines Motors entsprechen, wodurch die Anzahl der Punktschweißungen auf einer Verdrahtungsplatte reduziert wird.

US 2013/0313927 A1 beschreibt ein Elektrowerkzeug. Dieses weist einen elektronisch kommutierten Antriebsmotor, vorzugsweise einen Gleichstrommotor, auf. Der Motor umfasst einen mit einem Isolierkörper versehenen Statorkern, auf dem eine Motorwicklung ausgebildet ist. Ferner enthält der Motor mindestens ein elektrisch leitendes Anschlusselement zum elektrischen Anschluss der Motorwicklung, wobei das Anschlusselement am Isolierkörper angeordnet ist. Das Anschlusselement weist ein Befestigungssegment auf, und am Isolierkörper ist eine Aufnahme zur Aufnahme des Befestigungssegments vorgesehen. Das Befestigungssegment und die Aufnahme haben komplementäre geometrische Formen, die ein selbsttätiges Lösen des in der Aufnahme angeordneten Befestigungssegments verhindern.

US 2019/0319506 A1 beschreibt einen Isolator für einen Statorkern eines Elektromotors. Der Isolator ist so konfiguriert, dass er mit einem oberen Abschnitt des Statorkerns gekoppelt werden kann, und umfasst einen Hauptkörper, der eine Ringform aufweist, eine Vielzahl von Isolierzähnen, die zu einem mittleren Abschnitt des Hauptkörpers hin vorstehen und so konfiguriert sind, dass sie mit einer Vielzahl von Zähnen des Statorkerns gekoppelt werden können. Ferner umfasst der Isolator eine Vielzahl von Führungszungen, die von einer äußeren Umfangsfläche des Hauptkörpers an Positionen vorstehen, die der Vielzahl von Isolierzähnen entsprechen. Die mehreren Führungszungen sind so konfiguriert, dass sie Phasenspulen, die um die mehreren Isolierzähne gewickelt sind, und neutrale Spulen entlang der Außenumfangsfläche in einer Umfangsrichtung führen. Jede der mehreren Führungszungen definiert mehrere Führungsnuten, wobei jede der mehreren Führungsnuten so konfiguriert ist, dass sie mindestens eine der Phasenspulen oder die neutralen Spulen aufnimmt.

Der Erfindung liegt nun die Aufgabe zugrunde, einen verbesserten Stator zu ermöglichen.

Diese Aufgabe wird erfindungsgemäß gelöst durch ein Verfahren zur Ausbildung einer Statorwicklung eines Vollblechstators mit den Merkmalen des Anspruchs 1. Des Weiteren wird diese Aufgabe erfindungsgemäß gelöst durch einen Vollblechstator mit den Merkmalen des Anspruchs 4. Außerdem wird diese Aufgabe erfindungsgemäß gelöst durch einen Elektromotor mit den Merkmalen des Anspruchs 5. Vorteilhafte und teils für sich erfinderische Ausführungsformen und Weiterentwicklungen der Erfindung sind in den Unteransprüchen und der nachfolgenden Beschreibung dargelegt.

Das erfindungsgemäße Verfahren dient zur Ausbildung einer Statorwicklung eines Vollblechstators (kurz: Stators) für einen Elektromotor. Verfahrensgemäß wird dazu ein Statorblechpaket des Vollblechstators mit einer Isolierendscheibe ausgestattet, an der mehrere in Axialrichtung vorstehende Terminierdome ausgebildet sind. In Radialrichtung (insbesondere in Form von Vorsprüngen des Statorblechpakets) vorstehende Statorzähne werden mit einem Wickeldraht unter Ausbildung jeweils einer Spule bewickelt. Der Wickeldraht zwischen zwei der gleichen Phase zugeordneten Spulen und/oder zur Kontaktierung der oder jeder entsprechend zugeordneten Spule mit einer Motorelektronik wird an die Isolierendscheibe verlegt. Anders ausgedrückt verläuft der Wickeldraht zwischen solchen Spulen oder von einer Spule zu einer Kontaktierungsstelle mit der Motorelektronik an, bspw. entlang, der Isolierendscheibe. Der Wickeldraht wird dabei neben einer Anzahl von zur Fixierung des Wickeldrahts um jeweils einen Terminierdom gelegten Fixierungsschlaufen radial außerhalb und auch radial innerhalb der Terminierdome verlegt. D. h. zusätzlich zu diesen Fixierungsschlaufen, die über wenigstens 360 Grad um einen Terminierdom gelegt werden und somit ebenfalls einen radial innerhalb des Terminierdoms angeordneten Schlaufenabschnitt aufweisen, verläuft der Wickeldraht zumindest mancher Spulen (insbesondere zwischen zwei Spulen oder von einer Spule zu einer Kontaktierungsstelle) außerhalb und/oder innerhalb der Terminierdome. Somit kann der Wickeldraht einer Spule (oder Spulengruppe) entweder nur radial außerhalb oder radial innerhalb verlegt werden. Vorzugsweise wechselt der Wickeldraht aber zwischen diesen Verlegearten, umläuft also mehrere Terminierdome außenseitig und "überspringt" andere - insbesondere auch mehrere - innenseitig.

Es wird also ein Bauraum radial innerhalb der Terminierdome genutzt. Dadurch können unerwünschte Drahtüberkreuzungen vermieden werden. Außerdem kann insbesondere bei einer vergleichsweise schmalen Isolierendscheibe auch Bauraum außerhalb der Terminierdome eingespart oder anderweitig genutzt, bspw. indem gegebenenfalls die Terminierdome massiver gestaltet werden.

Der erfindungsgemäße Vollblechstator (kurz: Stator) ist vorzugsweise durch den mittels des hier und im Folgenden beschriebenen erfindungsgemäßen Verfahrens hergestellt sowie zum Einsatz in einem Elektromotor eingerichtet und vorgesehen. Dazu weist der Stator das Statorblechpaket sowie die Isolierendscheibe auf, an der die Terminierdome ausgebildet sind und die stirnseitig auf das Statorblechpaket aufgesetzt ist. Außerdem weist der Stator eine Mehrzahl der oben genannten Spulen auf, die mittels des Wickeldrahts an den in Radialrichtung vorstehenden Statorzähnen gewickelt sind. Der Wickeldraht zwischen zwei der gleichen Phase zugeordneten Spulen und/oder zur Kontaktierung der oder jeder entsprechend zugeordneten Spule mit einer Motorelektronik ist an die Isolierendscheibe verlegt. Der Wickeldraht ist neben der Anzahl von zur Fixierung des Wickeldrahts um jeweils einen Terminierdom gelegten Fixierungsschlaufen radial außerhalb und auch radial innerhalb der Terminierdome verlegt.

Der erfindungsgemäße Elektromotor weist den hier und im Folgenden beschriebenen Stator auf.

Der Stator und der Elektromotor weisen somit die hier und im Folgenden im Rahmen des Verfahrens beschriebenen und insbesondere sich daraus ergebenden körperlichen Merkmale und Vorteile gleichermaßen auf.

Unter "Umfangsrichtung" wird hier und im Folgenden insbesondere die tangential zu dem bevorzugt etwa kreisringförmigen Statorblechpaket (sowie zur zentral im Stator angeordneten Drehachse oder Achse eines im bestimmungsgemäßen Endfertigungszustand in diesem rotierbar angeordneten Rotors) stehende Richtung verstanden. Unter Radialrichtung wird entsprechend insbesondere eine zur Drehachse senkrecht stehende Richtung verstanden. Die Axialrichtung bezeichnet somit insbesondere die entlang der Drehachse verlaufende Richtung.

Die Terminierdome sind entlang einer Kreisringlinie an der Isolierendscheibe angeordnet. Dabei wird der Wickeldraht radial innerhalb der Terminierdome kreissehnenartig, d. h. insbesondere geradlinig verlegt.

Außerdem wird der radial innerhalb verlegte Wickeldraht von einem der Terminierdome zu einem anderen verlegt. Diese beiden Terminierdome dienen dabei insbesondere als Start- und Endpunkt, vorzugsweise der vorstehend genannten, durch den Wickeldraht beschriebenen Kreissehne. Optional wird der Wickeldraht an einem oder beiden dieser beiden Terminierdome mittels einer Umrundung dieses Terminierdoms festgelegt.

In einer Variante verläuft der Wickeldraht radial innerhalb von den in Umgangsrichtung einander abgewandten Enden wenigstens zweier benachbarter Terminierdome. In einer anderen Variante überspringt der Wickeldraht radial innerhalb wenigstens einen Terminierdom.

Insbesondere wird der Wickeldraht frei zwischen den zwei Terminierdomen gespannt. D. h. der Wickeldraht liegt im Bereich innerhalb der Terminierdome nicht an der Isolierendscheibe auf.

Im Gegensatz dazu wird der Wickeldraht bei der radial außerhalb der Terminierdome angeordneten Verlegung auf der von den Statorzähnen abgewandten Stirnfläche der Isolierendscheibe verlegt. Optional ist an dieser Stelle eine Art Ringnut in die Isolierendscheibe eingearbeitet und/oder die Isolierendscheibe weist zumindest teilweise eine radial außenseitig angeordnete Begrenzungswand auf. Insbesondere wird auch ein Mäandrieren des Wickeldrahts, d. h. ein abwechselnder Verlauf des Wickeldrahts radial innerhalb und radial außerhalb unmittelbar benachbarter Terminierdome (also eine Art "Slalomverlauf"), als teilweise radial-innerhalb Verlegen verstanden.

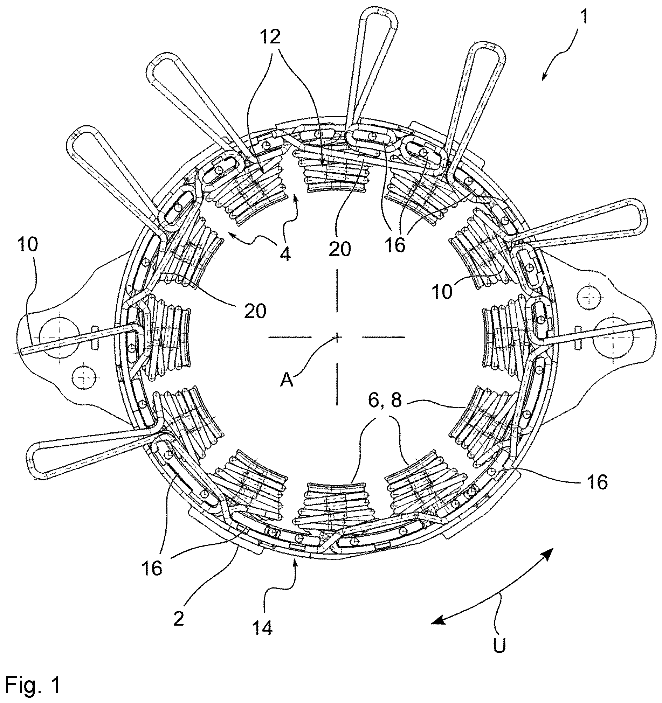

Nachfolgend wird ein Ausführungsbeispiel der Erfindung anhand einer Zeichnung näher erläutert. Darin zeigt die einzige Figur, Fig. 1, in einer Ansicht auf eine Stirnseite einen Vollblechstator in einem Fertigungsteilschritt.

In Fig. 1 ist schematisch ein (Vollblech-) Stator 1 eines nicht näher dargestellten Elektromotors in Ansicht auf eine Stirnseite dargestellt. Dieser Stator 1 ist im üblichen, bestimmungsgemäßen Einsatzzustand in ein Gehäuse des Elektromotors eingesetzt, meist eingepresst. Der Stator 1 ist aus einem Statorblechpaket 2 gebildet, das entlang einer Achse A aufeinander gestapelte Statorbleche aufweist. In diese Statorbleche und somit auch in das Blechpaket 2 sind in Bezug auf die Achse A radial innenseitig eine Vielzahl von Nuten 4 eingeschnitten. Vorsprünge des Statorblechpakets 2, die zwischen den Nuten 4 von einem in einer Umfangsrichtung U geschlossenen Ring radial nach innen vorstehen, werden hier und im Folgenden als Statorzähne, kurz: "Zähne 6", bezeichnet. An diesen Zähnen 6 sind radial innenseitig sogenannte Polschuhe 8 (oder auch Polschuhkappen) ausgebildet. Diese weisen zur Achse A hin ausgerichtet eine einen Kreisringabschnitt bildende Kante auf, die im bestimmungsgemäßen Einsatzzustand mit einem geringfügigen Luftspalt zu einem um die Achse A rotierbar in dem Stator 1 aufgenommenen Rotor angeordnet ist. Fig. 1 stellt dabei einen Zwischenfertigungsschritt des Stators 1 dar.

Um ein für den Betrieb des Elektromotors erforderliches Magnetfeld aufbauen zu können, werden die Zähne 6 mit einem Wickel- oder Spulendraht 10 bewickelt, so dass jeder Zahn 6 jeweils eine zugeordnete Spule 12 trägt. Man spricht hier auch von konzentrierter Wicklung. Um die elektrische Leistungsfähigkeit möglichst hoch auszubilden, ist eine möglichst enge Anordnung der einzelnen Drahtwindungen zueinander erforderlich.

Im dargestellten Ausführungsbeispiel weist der Stator 1 zwölf Zähne 6 und somit auch zwölf Pole) auf. Dabei sind mehrere Spulen 12 untereinander kontaktiert, indem der Wickeldraht 10 entlang einer sogenannten Isolierendscheibe 14, die im vorliegenden Ausführungsbeispiel als separates Bauteil auf das Statorblechpaket 2 aufgesteckt ist, zwischen den korrespondierenden Zähnen 6 verlegt wird. Die Isolierendscheibe 14 trägt dabei mehrere "Terminierdome 16", d. h. axial erstreckte Säulen oder Vorsprünge, um die herum der Wickeldraht 10 verlegt wird, um dessen Spannung aufrecht zu halten und ein Lockern der Spulen 12 zu verhindern.

Im vorliegenden Ausführungsbeispiel ist der Stator 1 derart klein, dass im Bereich des Rings des Statorblechpakets 2 nicht ausreichend Bauraum für Kontaktstellen, in die der Wickeldraht 10 eingelegt werden könnte, zur Verfügung steht. Aus diesem Grund wird nach Ausbildung der Spulen 12 und somit auch nach der Terminierung des Wickeldrahts 10 entlang der Isolierendscheibe 14 ein weiteres Bauteil, hier als Kontaktierungsring auf das Statorblechpaket 2 aufgesteckt. In diesem Kontaktierungsring sind Aufnahmen für den Wickeldraht 10 sowie für Schneidklemmkontakte angeordnet.

Grundsätzlich wird der Wickeldraht 10 der Spulen 12 außerhalb der Terminierdome 16 verlegt. Um aber bspw. ein Überkreuzen von Wickeldraht 10 unterschiedlicher Spulen 12 an der Isolierendescheibe 14 möglichst gering zu halten, wird der Wickeldraht 10 aber auch teilweise radial innerhalb der Terminierdome 16 verlegt. Einerseits mäandriert der Wickeldraht 10 hierzu - auch zum Fixieren und Spannen seiner selbst - teilweise um die Terminierdome 16. Andererseits ist der Wickeldraht 10 radial innerhalb der Terminierdome 16 auch an manchen Stellen zwischen (zumindest) zwei oder auch drei Terminierdomen 16 "aufgespannt". Dabei bildet der Wickeldraht 10 also jeweils eine Kreissehne 20, die zwischen den einander in Umfangsrichtung U abgewandten Enden zweier Terminierdome 16 verläuft. Das Mäandrieren des Wickeldrahts 10 um die zur Kreissehne 20 benachbarten Terminierdome 16 ist auch zum Spannen der Kreissehne 20 ausreichend. Diese teilweise radial innerhalb der Terminierdome 16 ausgeführte Drahtverlegung spart auch Bauraum im Bereich der Isolierendscheibe 14.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

### Bezugszeichenliste

- 1: Stator
- 2: Statorblechpaket
- 4: Nut
- 6: Zahn
- 8: Polschuh
- 10: Wickeldraht
- 12: Spule
- 14: Isolierendscheibe
- 16: Terminierdom
- 20: Kreissehne

- A: Achse
- U: Umfangsrichtung

## Patentansprüche

1. Verfahren zur Ausbildung einer Statorwicklung eines Vollblechstators (1) für einen Elektromotor, wobei verfahrensgemäß
- ein Statorblechpaket (2) des Vollblechstators (1) mit einer Isolierendscheibe (14), an der mehrere in Axialrichtung (A) vorstehende Terminierdome (16) ausgebildet sind, ausgestattet wird,
- in Radialrichtung vorstehende Statorzähne (6) mit einem Wickeldraht (10) unter Ausbildung jeweils einer Spule (12) bewickelt werden,
- der Wickeldraht (10) zwischen zwei der gleichen Phase zugeordneten Spulen (12) und/oder zur Kontaktierung der oder jeder entsprechend zugeordneten Spule (12) mit einer Motorelektronik an die Isolierendscheibe (14) verlegt wird,
wobei der Wickeldraht (10) neben einer Anzahl von zur Fixierung des Wickeldrahts (10) um jeweils einen Terminierdom (16) gelegten Fixierungsschlaufen radial außerhalb und auch radial innerhalb der Terminierdome (16) verlegt wird,
wobei die Terminierdome (16) entlang einer Kreisringlinie an der Isolierendscheibe (14) angeordnet sind,
**dadurch gekennzeichnet,**
**dass** der Wickeldraht (10) radial innerhalb der Terminierdome (16) kreissehnenartig verlegt wird,
**dass** der Wickeldraht (10) radial innerhalb von einem der Terminierdome (16) zu einem anderen verlegt wird, wobei der Wickeldraht (10) radial innerhalb von den in Umgangsrichtung (U) einander abgewandten Enden wenigstens zweier benachbarter Terminierdome (16) verläuft, oder wobei der Wickeldraht (10) radial innerhalb wenigstens einen Terminierdom (16) überspringt.

2. Verfahren nach Anspruch 1,
wobei der Wickeldraht (10) radial innerhalb von einem der Terminierdome (16) zu einem anderen verlegt wird und frei zwischen den zwei Terminierdomen (16) gespannt wird.

3. Verfahren nach Anspruch 1 oder 2,
wobei der Wickeldraht (10) radial außerhalb der Terminierdome (16) auf der von den Statorzähnen (6) abgewandten Stirnfläche der Isolierendscheibe (14) verlegt wird.

4. Vollblechstator (1) für einen Elektromotor, aufweisend
- ein Statorblechpaket (2),
- einer Isolierendscheibe (14), an der mehrere in Axialrichtung (A) vorstehende Terminierdome (16) ausgebildet sind und die stirnseitig auf das Statorblechpaket (2) aufgesetzt ist, und
- eine Mehrzahl von mittels eines Wickeldrahts (10) an in Radialrichtung vorstehende Statorzähne (6) gewickelten Spulen (12),
wobei der Wickeldraht (10) zwischen zwei der gleichen Phase zugeordneten Spulen (12) und/oder zur Kontaktierung der oder jeder entsprechend zugeordneten Spule (12) mit einer Motorelektronik an die Isolierendscheibe (14) verlegt ist, und wobei der Wickeldraht (10) neben einer Anzahl von zur Fixierung des Wickeldrahts (10) um jeweils einen Terminierdom (16) gelegten Fixierungsschlaufen radial außerhalb und auch radial innerhalb der Terminierdome (16) verlegt ist,
wobei die Terminierdome (16) entlang einer Kreisringlinie an der Isolierendscheibe (14) angeordnet sind,
**dadurch gekennzeichnet,**
**dass** der Wickeldraht (10) radial innerhalb der Terminierdome (16) kreissehnenartig verlegt ist,
**dass** der Wickeldraht (10) radial innerhalb von einem der Terminierdome (16) zu einem anderen verlegt ist, wobei der Wickeldraht (10) radial innerhalb von den in Umgangsrichtung (U) einander abgewandten Enden wenigstens zweier benachbarter Terminierdome (16) verläuft oder wobei der Wickeldraht (10) radial innerhalb wenigstens einen Terminierdom (16) überspringt.

5. Elektromotor mit einem Vollblechstator (1) gemäß Anspruch 4.

## Claims

1. Method for forming a stator winding of an annular laminated core (1) for an electric motor, wherein according to the method
- a stator lamination stack (2) of the annular laminated core (1) is equipped with an insulating end disc (14), on which a plurality of terminating domes (16) are formed protruding in the axial direction (A),
- stator teeth (6) protruding in the radial direction are wrapped with a winding wire (10), forming a respective coil (12),
- the winding wire (10) between two coils (12) assigned to the same phase and/or for connecting the or each correspondingly assigned coil (12) to motor electronics is routed on the insulating end disc (14), wherein in addition to a number of fixing loops each laid around a terminating dome (16) for fixing the winding wire (10), the winding wire (10) is routed radially outside and also radially inside the terminating domes (16),
wherein the terminating domes (16) are arranged along a circle ring line on the insulating end disc (14), **characterized**
**in that** the winding wire (10) is routed as a circle chord radially inside the terminating domes (16),
**in that** the winding wire (10) is routed radially on the inside from one of the terminating domes (16) to another, wherein the winding wire (10) runs radially on the inside of the ends of at least two adjacent terminating domes (16) facing away from one another in the circumferential direction (U), or wherein the winding wire (10) jumps at least one terminating dome (16) radially on the inside.

2. Method according to Claim 1,
wherein the winding wire (10) is routed radially on the inside from one of the terminating domes (16) to another and is clamped freely between the two terminating domes (16).

3. Method according to Claim 1 or 2,
wherein the winding wire (10) is routed radially outside the terminating domes (16) on the end face of the insulating end disc (14) facing away from the stator teeth (6).

4. Annular laminated core (1) for an electric motor, having
- a stator lamination stack (2),
- an insulating end disc (14) on which several terminating domes (16) are formed protruding in the axial direction (A) and which is placed onto the end face of the stator lamination stack (2), and
- a plurality of coils (12) wound by means of a winding wire (10) on stator teeth (6) protruding in the radial direction,
wherein the winding wire (10) between two coils (12) assigned to the same phase and/or for connecting the or each correspondingly assigned coil (12) to motor electronics is routed on the insulating end disc (14), and wherein, in addition to a number of fixing loops each laid around a terminating dome (16) for fixing the winding wire (10), the winding wire (10) is routed radially outside and also radially inside the terminating domes (16),
wherein the terminating domes (16) are arranged along a circle ring line on the insulating end disc (14), **characterized**
**in that** the winding wire (10) is routed as a circle chord radially inside the terminating domes (16),
**in that** the winding wire (10) is routed radially on the inside from one of the terminating domes (16) to another, wherein the winding wire (10) runs radially on the inside of the ends of at least two adjacent terminating domes (16) facing away from one another in the circumferential direction (U), or wherein the winding wire (10) jumps at least one terminating dome (16) radially on the inside.

5. Electric motor with an annular laminated core (1) according to Claim 4.

## Revendications

1. Procédé permettant de réaliser un enroulement de stator d'un stator en tôle pleine (1) pour un moteur électrique, dans lequel selon le procédé
- un empilage de tôles de stator (2) du stator en tôle pleine (1) est équipé d'une rondelle isolante (14) sur laquelle sont réalisés plusieurs dômes de terminaison (16) faisant saillie dans la direction axiale (A),
- des dents de stator (6) faisant saillie dans la direction radiale sont bobinées avec un fil de bobinage (10) en réalisant respectivement une bobine (12),
- le fil de bobinage (10) est posé entre deux bobines (12) associées à la même phase et/ou pour la mise en contact de la ou de chaque bobine (12) associée de manière correspondante avec une électronique de moteur sur la rondelle isolante (14),
dans lequel le fil de bobinage (10) est posé à côté d'un nombre de boucles de fixation, posées respectivement autour d'un dôme de terminaison (16) pour fixer le fil de bobinage (10), radialement à l'extérieur et aussi radialement à l'intérieur des dômes de terminaison (16), dans lequel les dômes de terminaison (16) sont disposés le long d'une ligne d'anneau de cercle sur la rondelle isolante (14),
**caractérisé**
**en ce que** le fil de bobinage (10) est posé radialement à l'intérieur des dômes de terminaison (16) à la manière d'une corde de cercle,
**en ce que** le fil de bobinage (10) est posé radialement à l'intérieur d'un des dômes de terminaison (16) jusqu'à un autre, dans lequel le fil de bobinage (10) s'étend radialement à l'intérieur des extrémités détournées les unes des autres dans la direction circonférentielle (U) d'au moins deux dômes de terminaison (16) voisins, ou dans lequel le fil de bobinage (10) saute radialement à l'intérieur au moins un dôme de terminaison (16).

2. Procédé selon la revendication 1,
dans lequel le fil de bobinage (10) est tendu radialement à l'intérieur d'un des dômes de terminaison (16) vers un autre et est tendu librement entre les deux dômes de terminaison (16).

3. Procédé selon la revendication 1 ou 2,
dans lequel le fil de bobinage (10) est posé radialement à l'extérieur des dômes de terminaison (16) sur la face frontale détournée des dents de stator (6) de la rondelle isolante (14).

4. Stator en tôle pleine (1) pour un moteur électrique, présentant
- un empilage de tôles de stator (2),
- une rondelle isolante (14) sur laquelle sont réalisés plusieurs dômes de terminaison (16) faisant saillie dans la direction axiale (A), et qui est posée sur la face frontale sur l'empilage de tôles de stator (2), et
- une pluralité de bobines (12) bobinées au moyen d'un fil de bobinage (10) sur des dents de stator (6) faisant saillie dans la direction radiale,
dans lequel le fil de bobinage (10) est posé entre deux bobines (12) associées à la même phase et/ou pour la mise en contact de la ou de chaque bobine (12) associée de manière correspondante avec une électronique de moteur sur la rondelle isolante (14), et dans lequel le fil de bobinage (10) est posé à côté d'un nombre de boucles de fixation, posées respectivement autour d'un dôme de terminaison (16) pour fixer le fil de bobinage (10), radialement à l'extérieur et aussi radialement à l'intérieur des dômes de terminaison (16),
dans lequel les dômes de terminaison (16) sont disposés le long d'une ligne d'anneau de cercle sur la rondelle isolante (14),
**caractérisé**
**en ce que** le fil de bobinage (10) est posé radialement à l'intérieur des dômes de terminaison (16) à la manière d'une corde de cercle,
**en ce que** le fil de bobinage (10) est posé radialement à l'intérieur d'un des dômes de terminaison (16) jusqu'à un autre, dans lequel le fil de bobinage (10) s'étend radialement à l'intérieur des extrémités détournées les unes des autres dans la direction circonférentielle (U) d'au moins deux dômes de terminaison (16) voisins, ou dans lequel le fil de bobinage (10) saute radialement à l'intérieur au moins un dôme de terminaison (16).

5. Moteur électrique, comprenant un stator en tôle pleine (1) selon la revendication 4.
